# EUROPÄISCHE PATENTANMELDUNG

(11) **EP 0 896 900 A2**
(43) Veröffentlichungstag der Anmeldung: **17.02.1999**
(21) Anmeldenummer: 98109063.2
(22) Anmeldetag: 19.05.1998
(51) Int. Cl.: B60R 9/04

(54) **Dachträgerelement für Fahrzeuge**

(30) Priorität: 12.08.1997 DE 19734824
(71) Anmelder: Happich Fahrzeug-Dachsysteme GmbH, D-42285 Wuppertal (DE)
(72) Erfinder: Stahlberg, Ricardo, 2780 Oeiras (PT); Steffens, Rainer, 45549 Sprockhövel (DE); Tokloth, Ralf, 51427 Bergisch Gladbach (DE)

(57) **Zusammenfassung**

Beschrieben wird ein Dachträgerelement für Fahrzeuge, bestehend aus einem Relingrohr (1) mit an dessen Enden angeordneten Stützfüßen (2) und/oder aus einem Querträger mit an dessen Enden angeordneten Haltevorrichtungen, wobei jede Anordnung einen Steckzapfen (4), eine Steckaufnahme (3) für den Steckzapfen (4) und einen Kleber zwischen Steckzapfen (4) und Steckaufnahme (3) zur Herstellung einer kraftschlüssigen Verbindung umfaßt, bei dem erfindungsgemäß eine kraftschlüssige und dauerhafte Verbindung über einen Schmelzkleber hergestellt wird.

## Beschreibung

Die Erfindung bezieht sich auf ein Dachträgerelement für Fahrzeuge, bestehend aus einem Relingrohr mit an dessen Enden angeordneten Stützfüßen und/oder aus einem Querträger mit an dessen Enden angeordneten Haltevorrichtungen, wobei jede Anordnung einen Steckzapfen, eine Steckaufnahme für den Steckzapfen und einen Kleber zwischen Steckzapfen und Steckaufnahme zur Herstellung einer kraftschlüssigen Verbindung umfaßt. Die Erfindung bezieht sich ferner auf ein Verfahren zum Herstellen eines solchen Dachträgerelements.

Die heutigen Fahrzeuge sind häufig mit einem Dachlastenträger ausgerüstet. Diese umfassen in der Regel zwei von Stützfüßen getragene Relingrohre, die sich an den Randbereichen des Fahrzeugdachs befinden und sich in Längsrichtung des Fahrzeugdachs erstrecken. An den zumeist fest auf dem Fahrzeugdach installierten Relingrohren sind über unterschiedlich konstruierte Haltevorrichtungen Querträger abnehmbar anzuordnen.

Abgesehen von wenigen Ausnahmen bestehen die Dachrelings jeweils aus einem Relingrohr mit an dessen Enden angeschlossenen separat hergestellten Stützfüßen, die einerseits das Relingrohr vom Dach beabstandet tragen und andererseits an der Fahrzeugkarosserie befestigt sind. Einen ähnlichen dreiteiligen Aufbau weisen auch die Querträger auf.

Für die Befestigungsanordnung der Stützfüße an den Relingrohren, wie auch der Haltevorrichtungen an den Querträgern ist es bekannt, die Steckzapfen mit den Steckaufnahmen mittels eines Zweikomponenten-Klebers zu verkleben oder miteinander zu verschrauben oder miteinander zu verstiften. Diese drei Befestigungs- oder Verbindungsarten sind nicht von Mängeln frei.

Ein Verkleben mit einem Zweikomponenten-Kleber setzt zunächst eine gute Passung zwischen Steckzapfen und Steckaufnahme voraus, weil bei zu großem Spiel eine nur geringe Kleberverbindung zwischen Steckzapfen und Steckaufnahme eintreten kann und bei zu geringem Spiel der Kleber beim Zusammenstecken von Steckzapfen und Steckaufnahme aus der Trennfuge herausgequetscht wird. In beiden Fällen wird keine unbedingt zuverlässige Klebeverbindung erreicht. Der Einsatz von Zweikomponenten-Kleber wird zudem abgelehnt, weil er mit einer beträchtlichen Geruchsbelastung verbunden ist und weil überquellender Kleber mit beträchtlichem Arbeitsaufwand wieder entfernt werden muß.

Beim Verstiften oder Verschrauben besteht die Gefahr, daß sich die Verbindungen mit der Zeit lösen und dann wackeln und klappern. Auch wird der Aufwand als zu groß empfunden. Die in der Regel sichtbaren Stift- und Schraubenköpfe beeinträchligen das gute Aussehen und bieten Angriffsflächen an denen sich Schmutz ansammeln kann.

Der Erfindung liegt hiernach ausgehend von einem Dachträgerelement der eingangs genannten Art die Aufgabe zugrunde, Vorsorge dafür zu treffen, daß die Verbindungsanordnung zwischen dem Steckzapfen und der Steckaufnahme mit geringer Geruchsbelastung erfolgen kann, daß besonders hohe Auszugskräfte erzielt werden, daß eine prozeßsichere Montage mit geringem Montageaufwand und geringen Montagezeiten erreicht wird und daß das Dachträgerelement ein gutes Aussehen ohne sichtbare Schraubenköpfe und dgl. erhält.

Gegenständlich wird diese Aufgabe erfindungsgemäß durch die Maßnahme nach Anspruch 1 und verfahrensgemäß durch die Maßnahmen nach Anspruch 7 gelöst, während die Unteransprüche zweckmäßige Weiterbildungen und vorteilhafte Ausgestaltungen der Erfindung angeben.

Dadurch, daß der Kleber ein Schmelzkleber ist, wird - wie Versuche gezeigt haben - eine kraftschlüssige und dauerhafte Oberflächenvereinigung zwischen dem Steckzapfen und der Steckaufnahme gewährleistet. Der Einsatz eines Schmelzklebers bedeutet zudem eine relativ geringe Geruchsbelastung in der Fertigung, die Erzielung besonders hoher Auszugskräfte durch gute Klebereigenschaften, einen geringen Montageaufwand und kurze Montagezeiten, eine prozeßsichere Montage und die Möglichkeit, die Klebeverbindung innerhalb einer bestimmten Zeit wieder zu lösen ohne dabei die miteinander verbundenen Bauteile zu zerstören.

Die Maßnahme nach Anspruch 2 stellt sicher, daß in den Verbindungsbereich nach dem Zusammenstecken der zu verbindenden Teile eine genügend große Menge des Klebermaterials von außen her eingebracht werden kann, und zwar unter weitgehendem Ausschluß der Gefahr einer Verunreinigung durch herausquellendes Klebermaterial.

Die Maßnahme nach Anspruch 3 bedeutet, daß der Schmelzkleber von einer später nicht mehr sichtbaren Stelle aus in den Injektionskanal und von dort in die Ringnut eingebracht werden kann, wobei es dann unbedeutend ist, wenn eine geringe Klebermenge aus dem Einspritzende des Injektionskanals wieder austreten sollte.

Bei der Weiterbildung der Erfindung nach Anspruch 4 wird von der Überlegung ausgegangen, daß es sehr wohl möglich ist, die Ringnut mit Schmelzklebermaterial zu füllen und erst hiernach den Rohrkörper gänzlich bis an die als Anschlag dienende Schulter auf den Steckzapfen aufzuschieben.

Bei der Maßnahme nach Anspruch 5 wird zunächst die Steckverbindung gänzlich hergestellt und hiernach der Schmelzkleber in den Verbindungsbereich eingebracht, wobei die Bohrung im Dichtring gewissermaßen als Verlängerung des Injektionskanals fungiert.

Die Maßnahme nach Anspruch 6 eröffnet die Möglichkeit, die Bohrung im Dichtring nach dem Nutfüllvorgang durch starkes Zusammendrücken der miteinander zu verbindenden Teile zu verpressen, so daß unabhängig vom Abbindeprozeß kein Schmelzklebermaterial aus der Bohrung heraustreten kann.

Ausführungsbeispiele der Erfindung werden im folgenden anhand der Zeichnungen näher erläutert, und es zeigen:
- Fig. 1: den Endbereich einer Dachreling mit einem Stützfuß,
- Fig. 2: den in Fig. 1 eingekreisten Teilbereich im vergrößerten Maßstab,
- Fig. 3: den in Fig. 1 eingekreisten Teilbereich in einer gegenüber Fig. 2 abgewandelten Ausführungsform,
- Fig. 4: eine Draufsicht von Fig. 3,
- Fig. 5: eine weitere Ausführungsform des in Fig. 1 eingekreisten Teilbereichs und
- Fig. 6: eine noch weitere Ausführungsform des in Fig. 1 eingekreisten Teilbereichs.

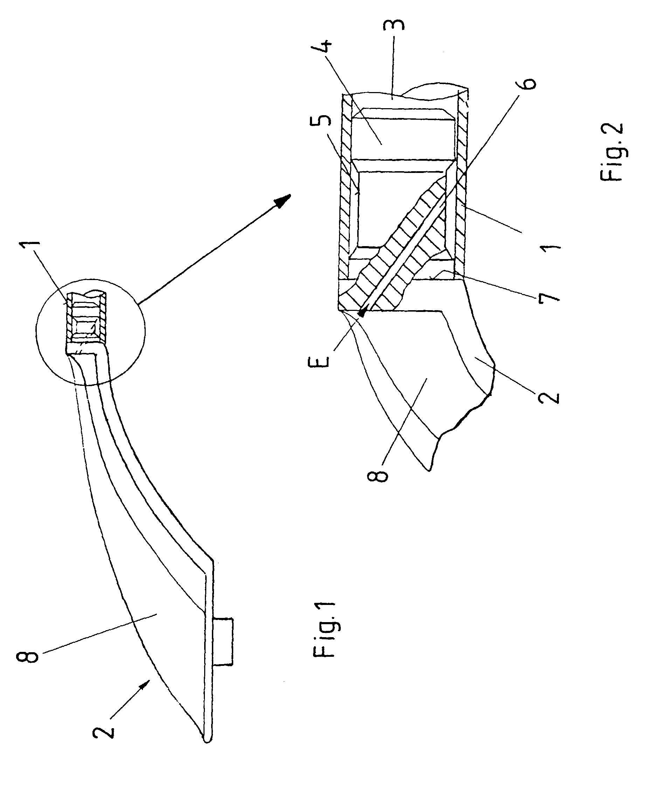

Fig. 1 zeigt den einen Endbereich einer Dachreling mit einem Relingrohr 1 und einem damit verbundenen Stützfuß 2. Das Relingrohr 1 bildet eine Steckaufnahme 3 für einen am Stützfuß 2 angeformten Steckzapfen 4.

Bei dem neuen Dachträgerelement ist der Steckzapfen 4 mit einer Ringnut 5 ausgebildet, in der eine Einspritzbohrung oder ein Injektionskanal 6 einmündet. Zur Herstellung einer kraftschlüssigen und dauerhaften Verbindung zwischen dem Relingrohr 1 und dem Stützfuß 2 wird zunächst eine Steckverbindung zwischen dem Relingrohr 1 und dem Steckzapfen 4 hergestellt.

Nach Abschluß der Steckverbindung stützt sich das freie Ende des Relingrohrs 1 an einer den Steckzapfen 4 begrenzenden Schulter 7 des Stützfußes 2 ab. Hiernach wird mit gewissem Druck ein nicht gezeigter Schmelzkleber in den Injektionskanal 6, entsprechend der Pfeillinie E eingespritzt, der die Ringnut 5 ausfüllt und am Boden der Ringnut ebenso haftet wie an der diesem zugewandten Innenwandung des Relingrohrs 1. Nach dem Abbindeprozeß ist eine absolut zuverlässige Kleberverbindung gewährleistet. Die Eingangsöffnung des Injektionskanals 6 wird nach erfolgter Relingmontage auf einem Fahrzeugdach durch einen Blendenkörper 8 den Blicken eines Betrachters entzogen.

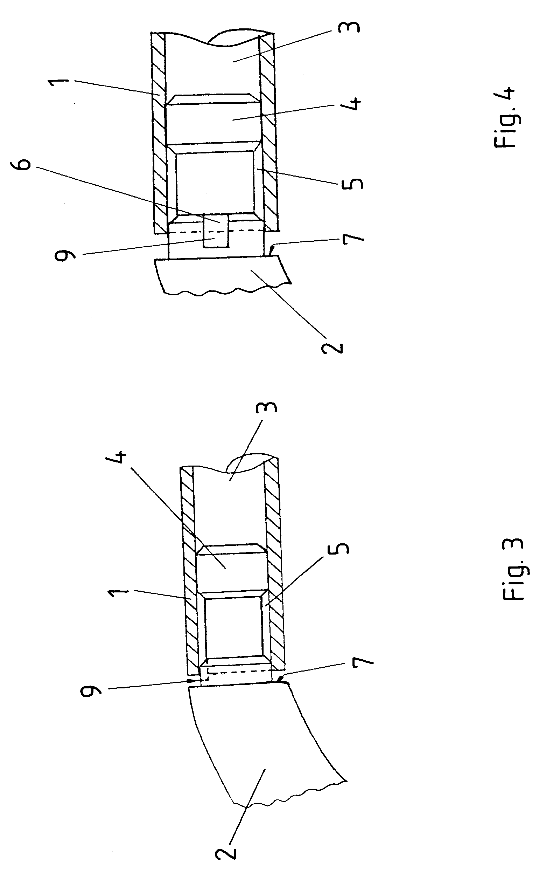

Beim Ausführungsbeispiel nach Fig. 3 und 4 sind die Bauteile weitgehend mit denen nach Fig. 1 und 2 übereinstimmend ausgebildet und tragen daher die gleichen Bezugszeichen. Der Stützfuß 2 ist hier ein Vollgußstützfuß. Der Steckzapfen 4 des Stützfußes 2 weist eine Ringnut 5 und einen darin einmündenden Injektionskanal 6 auf, der hier als nach außen offene parallel zur Steckzapfenachse verlaufende Axialnut ausgebildet ist, die kurz vor der Schulter 7 endet. Zur Herstellung einer kraftschlüssigen und dauerhaften Verbindung zwischen dem Relingrohr 1 und dem Stützfuß 2 wird zunächst eine Steckverbindung zwischen dem Relingrohr 1 und dem Steckzapfen 4 hergestellt, jedoch erfolgt das Aufschieben des Relingrohrs noch nicht bis zur Schulter 7 sondern nur soweit, daß noch eine Einspritzöffnung 9 für ein Schmelzklebermaterial im Injektionskanal 6 offenbleibt. In diese Einspritzöffnung 9 wird nun Schmelzkleber eingespritzt, der durch den Injektionskanal 6 in die Ringnut 5 gelangt und diese ausfüllt. Nach dem Füllvorgang wird das Relingrohr 1 bis an die Schulter 7 anliegend auf den Steckzapfen 4 aufgeschoben und es kommt zum Abbindeprozeß für den Schmelzkleber.

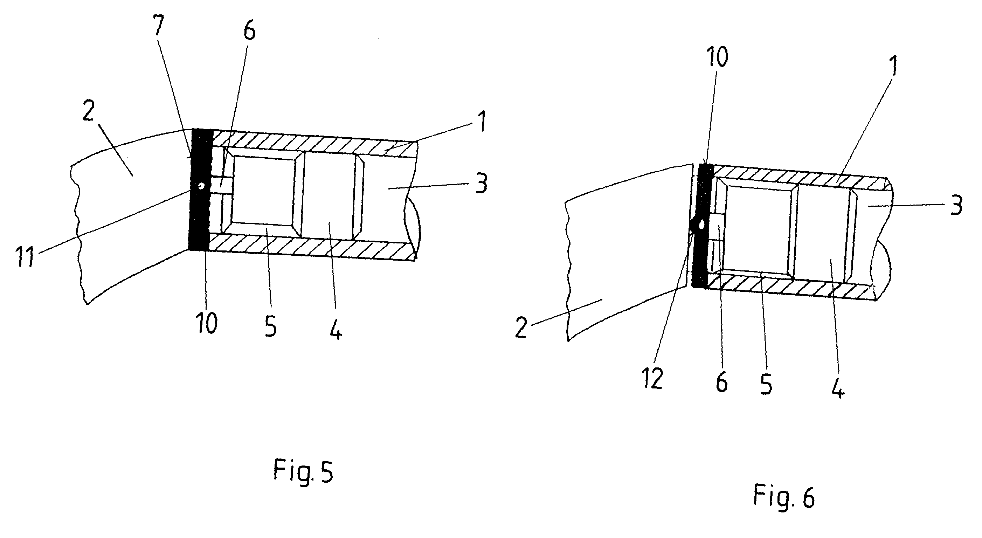

Der Aufbau des Ausführungsbeispiels nach Fig. 5 aber auch nach Fig. 6 ist ähnlich dem nach Fig. 3 und 4. Beim Ausführungsbeispiel nach Fig. 5 besteht der Unterschied darin, daß an der Schulter 7 ein Dichtring 10 abgestützt ist an den sich wiederum das Relingrohr 1 abstützt. Der Dichtring 10 weist eine Radialbohrung 11 auf, die in den Injektionskanal 6 einmündet. Das Einbringen des Schmelzklebers erfolgt hier in einer anhand von Fig. 1 und 2 beschriebenen Weise.

Fig. 6 unterscheidet sich von Fig. 5 durch einen an einer Außenseite des Dichtrings 10 angeformten Nocken 12, der es ermöglicht die Bohrung 11 nach dem Schmelzkleberfüllvorgang durch weiteres Zusammenstecken von Relingrohr 1 und Stützfuß 2 zu verpressen.

## Patentansprüche

1. Dachträgerelement für Fahrzeuge, bestehend aus einem Relingrohr (1) mit an dessen Enden angeordneten Stützfüßen (2) und/oder aus einem Querträger mit an dessen Enden angeordneten Haltevorrichtungen, wobei jede Anordnung einen Steckzapfen (4), eine Steckaufnahme (3) für den Steckzapfen (4) und einen Kleber zwischen Steckzapfen (4) und Steckaufnahme (3) zur Herstellung einer kraftschlüssigen Verbindung umfaßt, dadurch gekennzeichnet, daß der Kleber ein Schmelzkleber ist.

2. Dachträgerelement nach Anspruch 1, dadurch gekennzeichnet, daß zwischen dem Steckzapfen (4) und der Steckaufnahme (3) eine Ringnut (5) ausgebildet ist, die sich über einen axialen Teilbereich der Steckverbindung erstreckt und über einen Injektionskanal (6) von außen her für ein Einbringen von Schmelzkleber zugänglich ist.

3. Dachträgerelement nach Anspruch 1, dadurch gekennzeichnet, daß die Ringnut (5) im Steckzapfen (4) ausgebildet ist und daß der darin einmündende Injektionskanal (6) anderendig in einem Bereich von Stützfuß (2) oder Haltevorrichtung mündet, der von einem Verkleidungselement (8) abdeckbar ist.

4. Dachträgerelement nach Anspruch 1 oder 2, dadurch gekennzeichnet, daß die Ringnut (5) im Steckzapfen (4) ausgebildet ist und daß von der Ringnut (5) eine axial verlaufende, kurz vor einer die axiale Erstreckung des Steckzapfens (4) begrenzenden Schulter (7) endende Nut als Injektionskanal (6) ausgeht.

5. Dachträgerelement nach einem oder mehreren der Ansprüche 1, 2 oder 4, dadurch gekennzeichnet, daß auf dem Steckzapfen (4) ein sich an der Schulter (7) abstützender Dichtring (10) mit einer radialen, in der Nut mündenden Bohrung (11) angeordnet ist.

6. Dachträgerelement insbesondere nach Anspruch 5, dadurch gekennzeichnet, daß an einer Außenseite des Dichtrings (10) ein aus der Dichtringebene hervortretender Nocken (12), der Bohrung (11) benachbart, angeformt ist.

7. Verfahren zur Herstellung einer kraftschlüssigen Verbindung zwischen einer Steckaufnahme (3) und einem Steckzapfen (4) eines Dachträgerelements nach wenigstens einem der Ansprüche 1 bis 6, dadurch gekennzeichnet, daß der Steckzapfen (4) mit einer Ringnut (5) und einem darin einmündenden, von außen her zugänglichen Injektionskanal (6) ausgebildet wird, daß durch Zusammenstecken von Steckaufnahme (3) und Steckzapfen (4) eine Steckverbindung hergestellt wird und daß durch Einbringen von Schmelzkleber durch den Injektionskanal (6) in die Ringnut (5) eine kraftschlüssige und dauerhafte Oberflächenvereinigung zwischen der Steckaufnahme (3) und dem Steckzapfen (4) hergestellt wird.

8. Verfahren nach Anspruch 7, dadurch gekennzeichnet, daß zunächst ein bereichsweises Zusammenstecken von Steckzapfen (4) und Steckzapfenaufnahme (3) erfolgt, daß dann das Einbringen des Schmelzklebers vorgenommen wird und daß erst dann der Steckzapfen (4) und die Steckzapfenaufnahme (3) vollständig zusammengesteckt werden.
